# EUROPÄISCHE PATENTSCHRIFT

(11) **EP 1 833 757 B1**
(45) Veröffentlichungstag und Bekanntmachung des Hinweises auf die Patenterteilung: **15.10.2014**
(21) Anmeldenummer: 05812114.6
(22) Anmeldetag: 01.12.2005
(51) Int. Cl.: C01B 3/38, B01J 8/02, B01J 23/755

(54) **VORRICHTUNG ZUR HERSTELLUNG VON H2 UND CO ENTHALTENDEM SYNTHESEGAS**
DEVICE FOR PRODUCING A SYNTHESIS GAS CONTAINING H2 AND CO
DISPOSITIF POUR PRODUIRE UN GAZ DE SYNTHESE CONTENANT LES COMPOSES H2 ET CO

(30) Priorität: 08.12.2004 DE 102004059014
(43) Veröffentlichungstag der Anmeldung: 19.09.2007
(73) Patentinhaber: Lurgi AG, 60295 Frankfurt am Main (DE)
(72) Erfinder: WOLF, Ulrich, 63329 Egelsbach (DE); MATEOS QUEIRUGA, Daniel, E-28027 Madrid (ES)
(86) Internationale Anmeldenummer: PCT/EP2005/012722
(87) Internationale Veröffentlichungsnummer: WO 2006/061121

(56) Entgegenhaltungen:
- EP-A- 0 450 872
- HÄUSINGER P; LOHMÜLLER R, WATSON A M: "Hydrogen - 4. Production" ULLMANN'S ENCYCLOPEDIA OF INDUSTRIAL CHEMISTRY, [Online] 15. Juni 2000 (2000-06-15), XP002369204 WILEY Gefunden im Internet: URL:http://www.mrw.interscience.wiley.com/ ueic/articles/a13_297/sect4-fs.html> [gefunden am 2006-02-23]
- ULLMANN'S ENCYCLOPEDIA OF INDUSTRIAL CHEMISTRY, Bd. a12, 1989, Seite 192, XP001246504 VCH Verlagsgesellschaft mbH, Weinheim 1989 in der Anmeldung erwähnt

## Beschreibung

Die Erfindung betrifft eine Vorrichtung zur Herstellung von H₂ und CO enthaltendem Synthesegas durch katalytische Konvertierung von in einem Einsatzgasstrom enthaltenen Kohlenwasserstoffen mit Dampf, indem das auf 300 bis 400 °C erwärmte und anschließend entschwefelte Einsatzgas mit Dampf gemischt, das Einsatzgas-Dampf-Gemisch bei einem Druck von 10 bis 45 bar durch Wärmeaustausch auf eine Temperatur von 300 bis 700 °C, vorzugsweise 560 bis 650 °C, vorgewärmt und anschließend über einem Katalysator bei einem Druck von 10 bis 45 bar durch Wärmeaustausch auf eine Temperatur von 650 bis 950 °C aufgeheizt wird.

Die katalytische Konvertierung von in schwefelfreien Einsatzgasströmen enthaltenen Kohlenwasserstoffen mit Dampf zur Herstellung von Gas mit einem relativ hohen Gehalt an H₂ und CO erfolgt gemäß den gleichzeitig ablaufenden Reaktionen

CₙH₂ₙ₊₂ + n H₂O ↔ n CO + (2n +1) H₂

CH₄ + H₂O ↔ CO + 3H₂

CO + H₂O ↔ CO₂ + H₂

und ist als Dampf-Reformieren seit langem bekannt. Die Konvertierung der Kohlenwasserstoffe wird in aus senkrecht und parallel angeordneten, von außen beheizbaren, mit einem Nickel-Katalysator gefüllten, in mehreren parallelen Reihen in einem Feuerraum angeordneten Rohren durchgeführt und ist stark endotherm. Vor dem Dampf-Reformieren ist es erforderlich, den Einsatzgasstrom zu entschwefeln, um einer Vergiftung des in den Rohren enthaltenen Nickel-Katalysators vorzubeugen. Zu diesem Zweck wird der Einsatzgasstrom durch einen ZnO als Katalysator enthaltenden Entschwefelungsreaktor geleitet, in dem H₂S bei Temperaturen von 300 bis 400 °C zu ZnS und H₂O konvertiert wird. Der aus dem Entschwefelungsreaktor austretende im wesentlichen schwefelfreie Einsatzgasstrom, der eine kleine bei der Konvertierung gebildete Dampfmenge enthält, wird anschließend mit Dampf gemischt, das Gas-Dampf-Gemisch auf eine Temperatur von 300 bis 700 °C, vorzugsweise 560 bis 650 °C, vorgeheizt und anschließend in den Rohren des Rohrreaktors über dem Nickel-Katalysator auf eine Temperatur von 650 bis 950 °C aufgeheizt. Der den Rohrreaktor verlassende Gasstrom enthält H₂, CO, CO₂, unkonvertierten Dampf und CH₄ sowie ggf. inerte Gasbestandteile des Einsatzgasstroms. Die Rohre des Rohrreaktors werden i.a. durch in der Decke des Feuerraums angebrachte Brenner von außen her aufgeheizt. Der anschließend auf eine Temperatur von 200 bis 400 °C, vorzugsweise 250 bis 340 °C, abgekühlte Reformgasstrom wird durch einen, beispielsweise mit Eisenoxid als Katalysator gefüllten Reaktor geleitet und dabei CO mit dem unkonvertierten Prozessdampf gemäß der Reaktion

CO + H₂O ↔ CO₂ + H₂

umgewandelt (Ullmann's Encyclopedia of Industrial Chemistry, Vol. A 12, pages 186-192; VCH Verlagsgesellschaft mbH, Weinheim 1989).

Aus dem Stand der Technik sind Reaktionsapparate zur Durchführung endothermer Reaktionen bereits bekannt. So lehrt die europäische Patentanmeldung EP 0 450 872 A einen Reaktionsapparat, umfassend ein Reaktionsgefäß zum Bewirken einer endothermen Reaktion, und wenigstens eine Wärmeerzeugungseinrichtung zum Erwarmen des Reaktionsgefäßes, wobei die Wärmeerzeugungseinrichtung von dem Reaktionsgefäß umschlossen ist; wobei das Reaktionsgefäß aufweist: eine Eingabeeinrichtung zum Zuführen eines Zufuhrgases, welches der endothermen Reaktion zu unterziehen ist, was dazu führt, dass in dem Reaktionsgefäß ein Produktgas erzeugt wird, und eine Ausgabeeinrichtung zum Entfernen des Produktgases aus dem Reaktionsgefäß; und wobei die Wärmeerzeugungseinrichtung wenigstens ein keramisches oder metallisches Verbrennungsrohr aufweist, das ein Brennstoffzufuhrrohr konzentrisch umgibt, welches sich wenigstens teilweise über die Länge und im Inneren des Verbrennungsrohres erstreckt, wobei die Wärmeerzeugungseinrichtung aufweist: eine Einrichtung zur Zufuhr von Brennstoff zu dem Brennstoffzufuhrrohr und von Luft zu dem Verbrennungsrohr, wodurch der Brennstoff in dem Verbrennungsrohr verbrennt und Wärme erzeugt, die von dem Verbrennungsrohr in das Reaktionsgefäß übertragen wird, und eine Einrichtung zum Entfernen von Abgasen aus der Wärmeerzeugungseinrichtung, wobei der Apparat gekennzeichnet ist durch die separate Zufuhr von Luft und Brennstoff durch eine Vorwärmzone innerhalb des Reaktionsgefäßes, wobei von wenigstens einem von Produktgas und Abgasen Wärme auf die Luft und den Brennstoff übertragen wird, um die Luft und den Brennstoff vor der Verbrennung vorzuwärmen.

Es ist die Aufgabe der vorliegenden Erfindung, eine Vorrichtung bereitzustellen, die eine gegenüber den aus dem Stand derTechnik bekannten Vorrichtungen verbesserte Herstellung von H₂ und CO enthaltendem Synthesegaseermöglicht. Insbesondere soll die Vorrichtung zur Durchführung des Verfahrens eine kompakte Bauweise aufweisen und auf der Baustelle mit vergleichsweise niedrigerem Aufwand montierbar sein.

Gelöst ist diese Aufgabe durch die Gesamtheit der Merkmale des Reaktionsbehälters gemäß Anspruch 1.
Die Vorrichtung zur Durchführung des Verfahrens besteht aus einem senkrechten Reaktionsbehälter, in dem ein aus achsparallelen, bodenseitig geschlossenen, innenbeheizbaren Strahlungsrohren gebildetes Rohrbündel angeordnet ist, in jedes Strahlrohr ein Flammrohr unter Bildung eines Ringraums und in jedes Flammrohr eine Gaslanze unter Bildung eines Ringraums konzentrisch eingesetzt ist und der von dem Einsatzgas-Dampf-Gemisch durchströmbare Reaktionsraum um die Strahlungsrohre herum mit Katalysatorschüttung gefüllt ist.

Zweckmäßigerweise beträgt die Füllhöhe der Katalysatorschüttung im Reaktionsraum 30 bis 75 %, vorzugsweise 40 bis 60 % der Bauhöhe des Rohrbündels im Reaktionsraum des Reaktionsbehälters.

Der oberhalb der Katalysatorschüttung liegende Reaktionsraum des Reaktorbehälters ist die Vorwärmzone für das Einsatzgas-Dampf-Gemisches.

Die Vorwärmung des Einsatzgas-Dampf-Gemisches lässt sich vorteilhafterweise dadurch erreichen, dass im Bereich des oberhalb der Katalysatorschüttung liegenden Reaktionsraums jeweils durch die in dem von Strahlungsrohr und Flammrohr gebildeten Ringraum abströmenden Verbrennungsabgase eine rekuperatorartige Wirkung infolge von Wärmeaustausch erzielt wird. Die überwiegende Menge der über die untere Öffnung des Flammenrohrs austretenden Verbrennungsabgase wird über den Ringraum zwischen Flammrohr und Strahlungsrohr abgeführt und nach außen abgeleitet. Durch die Verbrennungsabgase werden die in dem von Flammrohr und Gaslanze gebildeten Ringraum eingeleitete Verbrennungsluft, das über die Gaslanze zugeführte Brenngas und das in den Reaktionsraum einströmende Einsatzgas-Dampf-Gemisch erwärmt. Eine Teilmenge der über die untere Öffnung des Flammrohrs austretenden Verbrennungsabgase wird im mittleren Bereich des Flammrohrs in den unteren Abschnitt des Flammrohrs zurückgeführt.

Die erfindungsgemäße Vorrichtung ist in der Zeichnung beispielhaft dargestellt und wird nachstehend näher erläutert. Es zeigen:

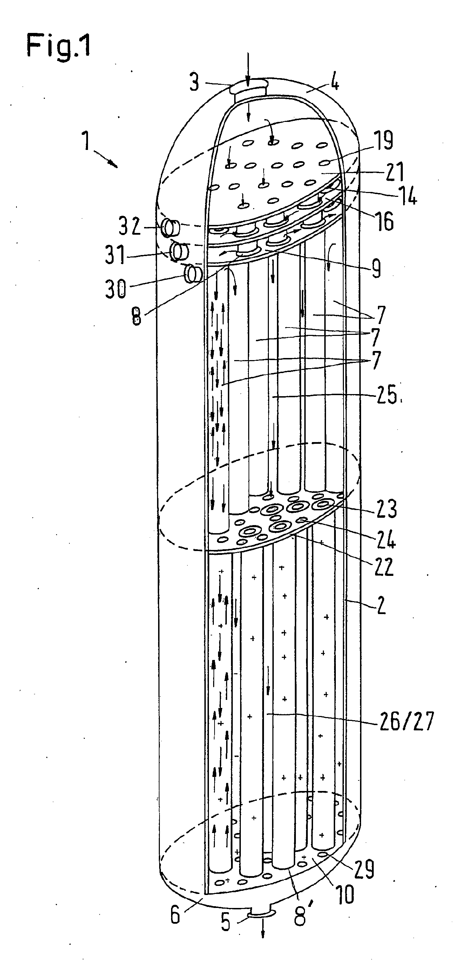

- Fig. 1: eine perspektivische Darstellung eines Reaktionsbehälter mit ausgebrochener Behälterwand und einem darin eingesetzten Strahlungsrohrbündel

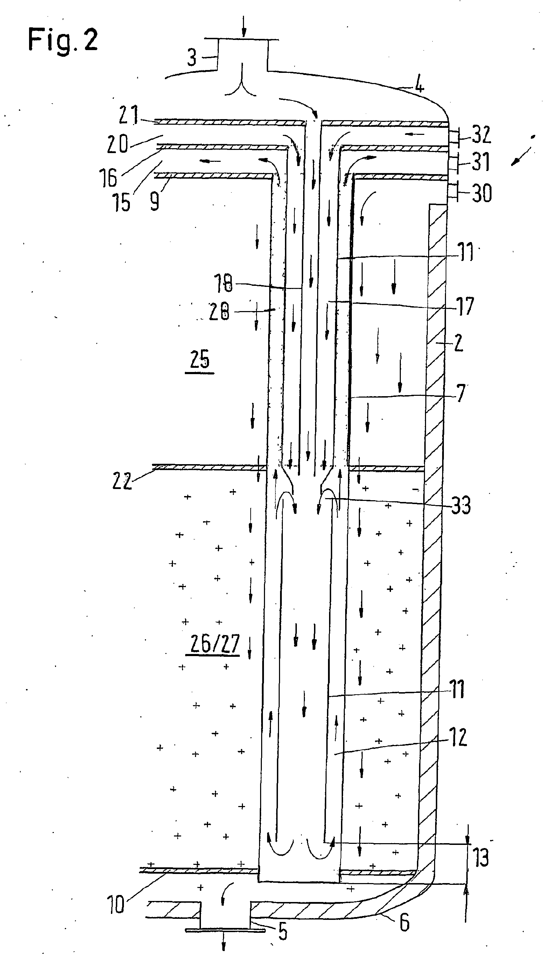

- Fig. 2: einen Ausschnitt eines Längsschnitts durch einen Reaktionsbehälter und durch ein Strahlungsrohr

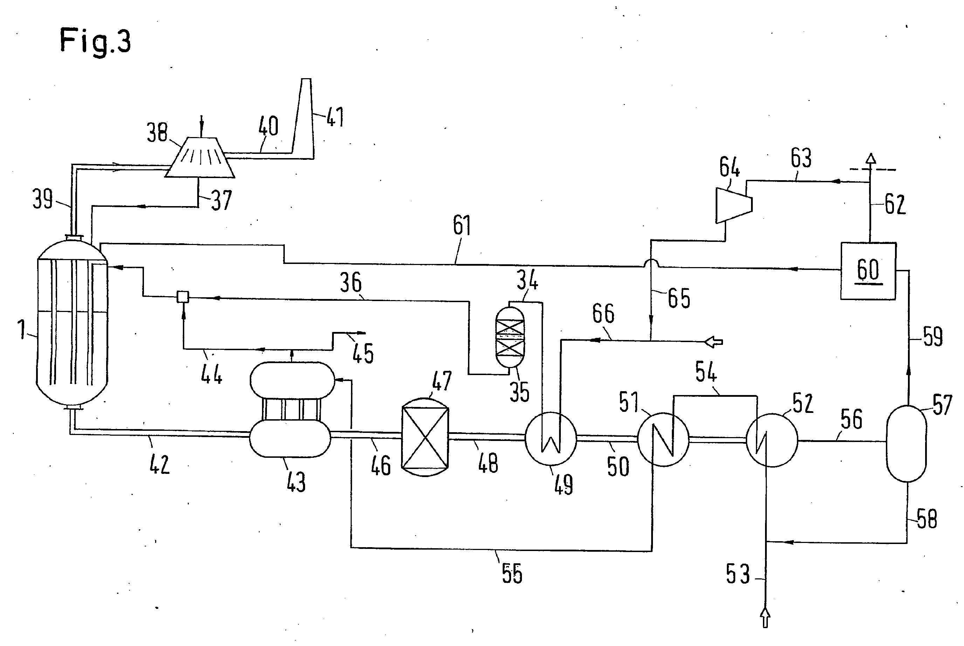

- Fig. 3: ein Verfahrensfließbild zur Herstellung von H₂ aus kohlenwasserstoffhaltigem Einsatzgas unter Verwendung des erfindungsgemäß gestalteten Reaktionsbehälters.

In einem senkrecht angeordneten, zylinderförmigen Reaktionsbehälter (1), bestehend aus dem innenseitig mit einer Feuerfestschicht (2) ausgekleideten Mantel, dem den Stutzen (3) für die Zuführung des Brenngases tragenden gewölbten Deckel (4) und dem den Stutzen (5) für die Abführung des Synthesegases aufweisenden gewölbten Boden (6), ist ein aus mehreren achsparallel verlaufenden, bodenseitig geschlossenen Strahlungsrohren (7) gebildetes Rohrbündel angeordnet. Die oberen Enden der Strahlungsrohre (7) sind in Durchbrechungen (8) eines oberen deckelseitig fest angebrachten Rohrbodens (9) eingeschweißt und die unteren Enden durch in einem bodenseitig fest angeordneten Rohrboden (10) befindliche Durchbrechungen (8') geführt. In die Strahlungsrohre (7) ist jeweils ein bodenseitig offenes Flammrohr (11) unter Bildung eines Ringraums (12) konzentrisch eingesetzt, wobei zwischen dem unteren Ende des Flammrohrs (11) und dem Boden des Strahlungsrohrs (7) ein Abstand (13) für den Durchtritt der Verbrennungsabgase aus dem Flammrohr (11) in den Ringraum (12) besteht. Die Flammrohre (11) sind mit den oberen Enden in Durchbrechungen (14) einer über dem Rohrboden (9) für die Strahlungsrohre (7) unter Bildung eines Zwischenraums (15) befestigten Rohrboden (16) eingeschweißt. In den oberen Abschnitt der Flammrohre (11) ist unter Bildung eines Ringraums (17) jeweils eine Gaslanze (18) für die Zufuhr des Brenngases konzentrisch eingesetzt, wobei die Gaslanzen (18) mit den oberen Enden in Durchbrechungen (19) eines über dem Rohrboden (16) für die Befestigung der Flammrohre (11) unter Bildung eines Zwischenraums (20) fest angebrachten Rohrboden (21) eingeschweißt sind. Der Reaktionsraum des Reaktionsbehälters (1) besteht durch die Anordnung eines im mittleren Bereich befestigten Rohrbodens (22), der Durchbrechungen (23,24) für die Strahlungsrohre (7) und den Durchtritt des Einsatzgas-Dampf-Gemisches aufweist, aus einem oberen und einem unteren Abschnitt (25,26). Im unteren Abschnitt (26) ist der Reaktionsraum um die Strahlungsrohre (7) herum mit Katalysatorschüttung (27) ausgefüllt. Durch den im oberen Abschnitt (25) des Reaktionsraums jeweils zwischen Strahlungsrohr (7) und Flammrohr (11) bestehenden Ringraum (28) wird eine rekuperatorartige Wirkung infolge von Wärmeaustausch mit den Verbrennungsabgasen erzielt. Der bodenseitig angebrachte Rohrboden (10) ist mit Durchbrechungen (29) für die Ausleitung des Synthesegases aus dem Reaktionsraum versehen. Über den unmittelbar unterhalb des deckelseitigen Rohrbodens (9) im Mantel des Behälters (1) angebrachten Stutzen (30) wird in den zwischen dem Rohrboden (9) und dem darüber angeordneten Rohrboden (16) bestehenden Zwischenraum (15) Einsatzgas in den Reaktionsraum (25,26) eingeleitet. Die aus der unteren Öffnung des Flammrohrs (11) austretenden Verbrennungsabgase strömen über den von Flammrohr (11) und Strahlungsrohr (7) gebildeten Ringraum (12) in den zwischen dem Rohrboden (9) und dem darüber liegenden Rohrboden (16) bestehenden Zwischenraum (15), aus dem diese über einen im Mantel des Behälters (1) angebrachten Stutzen (31) ausgeleitet werden. In den von dem Rohrboden (16) für die Befestigung der oberen Enden der Flammrohre (11) und dem darüber angeordneten Rohrboden (21) für die Halterung der oberen Enden der Gaslanzen (18) gebildeten Zwischenraum (20) wird über einen im Mantel des Behälters (1) angebrachten Stutzen (32) Verbrennungsluft zugeführt, die über den zwischen dem Flammrohr (11) und der Gaslanze (18) bestehenden Ringraum (17) in den unteren als Verbrennungsraum dienenden Abschnitt des Flammrohrs (11) geleitet wird. Unmittelbar unterhalb des im mittleren Bereich des Reaktionsbehälters (1) befestigten Rohrbodens (22) besitzt das Flammrohr (11) Durchbrechungen (33), über die ein Teil der über den Ringraum (12) zwischen Flammrohr (11) und Strahlungsrohr (7) abströmenden Verbrennungsabgase in den unteren Abschnitt des Flammrohrs (11) zurückgeleitet wird.

### Ausführungsbeispiel:

Über Leitung (34) werden dem ein Hydrierbett enthaltenden Entschwefelungsreaktor (35) 3140 m³/h auf eine Temperatur von 340 °C vorgewärmtes Erdgas aufgegeben und nach der Entschwefelung über Leitung (36) dem Reaktionsraum (25,26) des Reaktionsbehälters (1) zugeführt. Über Leitung (37) wird die in einem Luftvorwärmer (38) auf eine Temperatur von 300 °C erwärmte Verbrennungsluft den Gaslanzen (18) zugeleitet. Die eine Temperatur von 450 °C aufweisenden Verbrennungsabgase treten über den im Mantel des Reaktionsbehälters (1) angebrachten Stutzen (31) aus, werden über Leitung (37) dem Luftvorwärmer (38) zugeführt und nach Abkühlung auf eine Temperatur von 180 °C über Leitung (40) zum Kamin (41) geleitet. Das über den Stutzen (5) im Behälterboden (6) austretende, eine Temperatur von 830 °C besitzende Synthesegas strömt über Leitung (42) in eine Dampftrommel (43), in der die Temperatur des Synthesegases auf 340 °C erniedrigt und der gebildete Dampf teilweise über Leitung (44) dem Erdgasstrom in Leitung (36) zugesetzt und/oder teilweise über Leitung (45) aus dem Prozess ausgeleitet wird. Das Synthesegas wird über Leitung (46) einem Konverter (47) aufgegeben und das CO mit dem unkonvertierten Prozessdampf zu CO₂ und H₂ konvertiert. Der aus dem Konverter (47) austretende eine Temperatur von 415 °C aufweisende Synthesegasstrom wird über Leitung (48) dem vom zugeführten Ergasstrom durchflossenen Wärmetauscher (49) aufgegeben. Der über Leitung (50) aus dem Wärmetauscher (49) abfließende eine Temperatur von 336 °C besitzende Synthesegasstrom durchströmt nacheinander die Wärmetauscher (51,52), von denen der Wärmetauscher (52) über Leitung (53) mit vörzuwärmendem Frischwasser beaufschlagt wird. Das aus dem Wärmetauscher (52) austretende Frischwasser wird über Leitung (54) dem Wärmetauscher (51) zugeführt und über Leitung (55) an die Dampftrommel (43) abgegeben. Der aus dem Wärmetauscher (52) austretende und über Leitung (56) einem Separator (57) zugeführte Gasstrom wird in eine Gaskomponente und in Kondensat getrennt. Das über Leitung (58) abgezogene Kondensat wird dem Frischwasserstrom in Leitung (53) zugesetzt und der abgezogene Gasstrom über Leitung (60) einem Druckwechsel-Adsorber (60) aufgegeben, in dem H₂ von den übrigen Gaskomponenten getrennt wird. Diese Gaskomponenten werden über Leitung (61) als Brenngas in den zwischen den Rohrböden (16,21) des Reaktionsbehälters (1) bestehenden Zwischenraum (20) geleitet und den Gaslanzen (18) zugeführt. Aus dem Druckwechsel-Adsorber (60) werden 8300 Nm³/h H₂ über Leitung (62) nach außen abgeführt. Aus der Leitung (62) wird eine kleine Teilmenge H₂ abgeleitet, über Leitung (63) einem Verdichter (64) zugeführt und über Leitung (65) dem in Leitung (66) strömenden Erdgas zugesetzt.

## Patentansprüche

1. Reaktionsbehälter zur Herstellung von H₂ und CO enthaltendem Gas durch katalytische Konvertierung von in einem entschwefelten, auf eine Temperatur von 300 bis 400° C vorgewärmten Einsatzstrom enthaltenen Kohlenwasserstoffen mit Dampf, wobei in dem senkrechten Reaktionsbehälter ein aus achsparallelen, bodenseltlg geschlossenen, Innen beheizbaren, von einem Katalysator außen umgebenen Strahlungsrohren bestehendes Rohrbündel angeordnet ist, **gekennzeichnet durch** ein In jedes Strahlungsrohr (7) unter Bildung eines Ringraums (12) konzentrisch eingesetztes Flammrohr (11), eine in jedes Flammrohr unter Bildung eines Ringraums (17) konzentrisch eingesetzte Gaslanze (18), im mittleren Bereich eines jeden Flammrohr angebrachte Durchbrechungen (33) und eine bis zu einer Höhe von 30 bis 75 % der Bauhöhe des Rohrbündels in den Reaktionsraum des Reaktionsbehälters eingefüllten Katalysator (27).

2. Reaktionsbehälter nach Anspruch 1, **dadurch gekennzeichnet, dass** der oberhalb des Katalysators (27) liegende Reaktionsraum (25) des Reaktionsbehälters als Vorwärmraum für das Einsatzgas-Dampf-Gemisch vorgesehen ist.

## Claims

1. A reaction vessel for the production of gas containing H₂ and CO by catalytic conversion of hydrocarbons contained in a desulfurized feed stream preheated to a temperature of 300 to 400 °C with steam, wherein in the vertical reaction vessel there is arranged a tube bundle consisting of axially parallel radiant tubes closed at the bottom, heatable on the inside, and surrounded by a catalyst on the outside, **characterized by** a fire tube (11) concentrically inserted into each radiant tube (7) by forming an annular space (12), a gas lance (18) concentrically inserted into each fire tube by forming an annular space (17), perforations (33) provided in the middle region of each fire tube, and a catalyst (27) filled into the reaction space of the reaction vessel up to a height of 30 to 75 % of the overall height of the tube bundle.

2. The reaction vessel according to claim 1, **characterized in that** the reaction space (25) of the reaction vessel located above the catalyst (27) is provided as preheating space for the feed gas/steam mixture.

## Revendications

1. Récipient de réaction pour la préparation de gaz contenant H₂ et CO par conversion catalytique par de la vapeur d'hydrocarbures contenus dans un courant de charge désulfuré et porté au préalable à une température de 300 à 400°C, dans lequel un faisceau de tubes constitué de tubes rayonnants parallèles à l'axe, fermés du côté du fond, pouvant être chauffés de l'intérieur et entourés à l'extérieur d'un catalyseur est disposé dans le récipient de réaction vertical, **caractérisé par** un tube (11) de flamme inséré concentriquement dans chaque tube (7) rayonnant avec formation d'un espace (12) annulaire, par une lance (18) de gaz insérée concentriquement dans chaque tube de flamme avec formation d'un espace (17) annulaire, par des traversées (33) ménagées dans la partie médiane de chaque tube de flamme et par un catalyseur remplissant l'espace de réaction du récipient de réaction jusqu'à une hauteur de 30 à 75% de la hauteur de construction du faisceau de tubes.

2. Récipient de réaction suivant la revendication 1, **caractérisé en ce que** l'espace (25) de réaction, se trouvant au-dessus du catalyseur (27), du récipient de réaction est prévu comme espace de chauffage préalable du mélange gaz de charge-vapeur.
